# EUROPÄISCHE PATENTSCHRIFT

(11) **EP 3 762 248 B1**
(45) Veröffentlichungstag und Bekanntmachung des Hinweises auf die Patenterteilung: **05.10.2022**
(21) Anmeldenummer: 19706416.5
(22) Anmeldetag: 11.02.2019
(51) Int. Cl.: B60K 6/48, B60K 6/383, B60K 6/387, B60K 6/365, B60K 6/547, F16H 3/72, F16H 3/44

(54) **ANTRIEBSSTRANG MIT EINER ELEKTRISCHEN MASCHINE**
DRIVE TRAIN HAVING AN ELECTRIC MACHINE
CHAÎNE CINÉMATIQUE POURVUE D'UNE MACHINE ÉLECTRIQUE

(30) Priorität: 08.03.2018 DE 102018203563
(43) Veröffentlichungstag der Anmeldung: 13.01.2021
(73) Patentinhaber: Magna PT B.V. & Co. KG, 74199 Untergruppenbach (DE); Getrag Ford Transmissions GmbH, 50735 Köln (DE)
(72) Erfinder: GULLASCH, Jens, 74360 Ilsfeld (DE); BRESK, Marcel, 70435 Stuttgart (DE); GÜLTLINGER, Johannes, 70374 Stuttgart (DE); HEGERATH, Andreas, 50126 Bergheim (DE)
(74) Vertreter: Rausch, Gabriele
(86) Internationale Anmeldenummer: PCT/EP2019/053255
(87) Internationale Veröffentlichungsnummer: WO 2019/170368

(56) Entgegenhaltungen:
- CN-U- 201 651 191
- DE-A1-102012 212 257
- US-A1- 2007 129 196
- US-B1- 9 770 971

## Beschreibung

Die vorliegende Erfindung betrifft einen Antriebsstrang, insbesondere für ein Kraftfahrzeug, mit einer elektrischen Maschine.

Hybridisierte Antriebsstränge sind dem Stand der Technik in vielerlei Variationen bekannt geworden. Sie beinhalten ein Getriebe in Form eines Stirn- oder Planetenradgetriebes, einen Antriebsmotor wie einer Verbrennungskraftmaschine und einen weiteren Antriebsmotor wie eine elektrische Maschine, sodass die jeweilige Antriebsleistung beider Maschinen kombiniert oder separat an den Abtrieb übertragen werden kann.

Die Verbrennungskraftmaschine ist üblicherweise mittels einer Anfahrkupplung mit dem Getriebe koppelbar, wohingegen die elektrische Maschine je nach Bedarf an unterschiedlichen Stellen an den Antriebstrang angebunden ist.

Ist die elektrische Maschine zwischen der Verbrennungskraftmaschine und dem Getriebe angeordnet oder direkt mit dem Getriebe gekoppelt, können die verbrennungskraftmotorischen Gangstufen von der elektrischen Maschine zumindest teilweise mit genutzt werden. Daraus ergibt sich der Vorteil, dass man ohne großem Aufwand schon bestehende Getriebe einfach um eine elektrische Maschine erweitern kann.

Auch ist dem Stand der Technik ein Antriebsstrang bekannt geworden, deren elektrische Maschine mit dem Abtrieb gekoppelt ist.

Die Anbindung erfolgt üblicherweise mittels eines Zugmitteltriebes, einer Stirnradstufe oder einem Planetenradsatz, wobei vorzugsweise eine Übersetzungsstufe gewählt wird, mit der die elektrische Maschine in einem effizienten, hohen Drehzahlbereich betrieben werden kann.

Insbesondere hat es sich als vorteilhaft erwiesen, wenn die elektrische Maschine über einen Planetenabtriebsradsatz in Form eines Planetenradsatzes mit dem Abtrieb gekoppelt ist, indem ein erstes Element des Planetenabtriebsradsatzes mit dem Getriebe, ein zweites Element des Planetenabtriebradsatzes mit der elektrischen Maschine und ein drittes Element des Planetenabtriebsradsatzes mit dem Abtrieb verbunden ist. In dieser Konstellation treffen die Leistungseinträge beider Antriebsmaschinen an dem Planetenabtriebsradsatz zusammen. Die Drehzahlen beider Antriebsmaschinen sind unabhängig der jeweiligen anderen Antriebsmaschine einstellbar. Aufgrund ihrer Fahreigenschaften sind derartige Antriebsstränge begrifflich an stufenlose Getriebe angelehnt und unter dem Namen eIVT- bzw. eCVT-Getriebe bekannt, wobei sie sich technisch von diesen unterscheiden.

Grundsätzlich umfasst ein Planetenabtriebsradsatz drei Elemente, nämlich ein Sonnenrad, einen Träger und ein Hohlrad. Welches der drei Elemente dem Sonnenrad, dem Träger oder dem Hohlrad zugeordnet ist, kann frei gewählt werden. Entscheidend ist, dass das Getriebe, die elektrische Maschine, als auch der Abtrieb an nur je einem Element des Planetenabtriebsradsatzes angebunden sind. So ist beispielsweise das Sonnenrad mit der elektrischen Maschine, der Träger mit dem Abtrieb und das Hohlrad mit dem Getriebe verbunden. Oder aber das Sonnenrad ist mit Abtrieb, der Träger mit dem Getriebe und das Hohlrad mit der elektrischen Maschine, usw. verbunden.

So zeigt die DE 10 2013 215 114 A1 ebenfalls einen Planetenabtriebsradsatz, wobei das Hohlrad mit einer elektrischen Maschine, das Sonnenrad mit einem Getriebe verbunden ist und der Träger hiervon mit einem Abtrieb verbunden oder verbindbar sind und wobei das Getriebe mit der Verbrennungskraftmaschine koppelbar ist. Das Getriebe ist hierbei als Stufengetriebe ausgebildet, wobei der Planetenabtriebsradsatz koaxial zu einer Abtriebswelle angeordnet ist.

DE 10 2012 212 257 A1 zeigt einen Antriebsstrang einer elektrischen Maschine (EM), wobei eine Verbrennungskraftmaschine am Getriebeeingang angeschlossen ist.

Das Getriebe weist einen Planetenabtriebsradsatz auf, wobei die Verbrennungskraftmaschine an das Getriebe angebunden oder anbindbar ist, und wobei der Planetenabtriebsradsatz ein Hohlrad, ein Sonnenrad und einenTräger aufweist.

Das Getriebe ist an das Hohlrad des Planetenabtriebradsatzes angebunden, wobei die elektrische Maschine an das Sonnenrad des Planetenabtriebradsatzes angebunden oder anbindbar ist, wobei der Träger des Planetenabtriebradsatzes mit einem Abtrieb verbunden ist, und wobei die Verbrennungskraftmaschine, das Getriebe und der Planetenabtriebsradsatz entlang einer Hauptachse angeordnet sind.

Insgesamt bleibt der Wunsch bestehen, derartige Antriebsstränge zu verbessern und radial möglichst kompakt zu gestalten.

Gelöst wird diese Aufgabe durch einen Antriebsstrang gemäß Anspruch 1, wobei die Verbrennungskraftmaschine, das Getriebe und der Planetenabtriebsradsatz entlang einer Hauptachse angeordnet sind.

In der erfindungsgemäßen Ausgestaltung ist das erste Element des Planetenabtriebradsatzes einem Hohlrad zugeordnet, wobei das zweite Element des Planetenabtriebradsatzes einem Sonnenrad zugeordnet ist, wobei das dritte Element des Planetenabtriebradsatzes einem Träger zugeordnet ist. Durch diese Zuordnung ist die Anbindung der einzelnen Elemente des Planetenabtriebradsatzes konstruktiv besonders einfach umzusetzen, insbesondere dann, wenn in einer weiteren vorteilhaften Ausgestaltung der Träger und das Sonnenrad drehbar zueinander gelagert sind.

Ferner sieht die erfindungsgemäße Ausgestaltung vor, dass die Verbrennungskraftmaschine über eine Eingangswelle mit einem Kupplungssystem verbunden ist, wobei das Kupplungssystem mit dem Getriebe gekoppelt ist und wobei das Sonnenrad des Planetenabtriebradsatzes und die Eingangswelle drehbar zueinander gelagert sind, wodurch der Antriebsstrang radial besonders kompakt gebaut werden kann.

Besonders vorteilhaft ist es, wenn das Kupplungssystem und die Verbrennungskraftmaschine axial auf gegenüberliegenden Seiten der Hauptachse angeordnet sind. Hierdurch liegt das Kupplungssystem auf der der Verbrennungskraftmaschine gegenüberliegenden Endseite des Antriebsstranges, was eine einfache Anbindung einer hydraulischen Ansteuerung an das Kupplungssystem ermöglicht.

Zudem ist erfindungsgemäß vorgesehen, dass das Getriebe aus einem ersten und einem zweiten Planetenradsatz besteht, die miteinander gekoppelt sind, wobei der erste und der zweite Planetenradsatz jeweils ein Sonnenrad, einen Träger und ein Hohlrad aufweisen, wobei der erste Planetenradsatz mit dem Kupplungssystem gekoppelt ist, wobei das Kupplungssystem eine erste Kupplung, eine zweite Kupplung und eine erste Bremse aufweist, wobei das Sonnenrad des ersten Planetenradsatzes und die Verbrennungskraftmaschine mittels der ersten Kupplung verbindbar sind, wobei der Träger des ersten Planetenradsatzes und die Verbrennungskraftmaschine mittels der zweiten Kupplung verbindbar sind und wobei das Sonnenrad des ersten Planetenradsatzes mittels der Bremse gegen ein Gehäuse blockierbar ist.

Ferner ist es vorteilhaft, wenn der Träger des ersten Planetenradsatzes mit dem Hohlrad des zweiten Planetenradsatzes drehfest verbunden ist, wobei das Hohlrad des ersten Planetenradsatzes mit dem Träger des zweiten Planetenradsatzes drehfest verbunden ist.

Eine weitere Ausgestaltung sieht vor, dass der Träger des zweiten Planetenradsatzes mit dem Hohlrad des Planetenabtriebradsatzes drehverbunden ist und mittels einer Bremse gegen das Gehäuse blockierbar ist, um eine erste elektromotorische Gangstufe einzurichten.

Eine weitere Ausgestaltung sieht vor, dass das Hohlrad und der Träger des Planetenabtriebradsatzes mittels einer dritten Kupplung drehfest verbindbar sind, um eine zweite elektrische Gangstufe einzurichten.

Ferner ist es vorteilhaft, wenn das Sonnenrad des zweiten Planetenradsatzes mit einer Welle drehverbunden ist, die sich axial entlang der Hauptachse aus dem Getriebe heraus erstreckt und drehbar zum Sonnenrad des Planetenabtriebradsatzes gelagert ist und wobei die Welle ein Schaltelement aufweist, das entweder als ein Freilauf, eine Schaltkupplung oder eine Bremse ausgebildet ist, um das Sonnenrad gegen das Gehäuse blockieren zu können.

Eine vorteilhafte Ausgestaltung sieht vor, das Schaltelement ebenfalls entlang der Hauptachse anzuordnen. Das Schaltelement ist dabei vorzugsweise axial benachbart oder distanziert zum Getriebe und zum Planetenabtriebsradsatz, angeordnet sodass die hydraulische Ansteuerung des Schaltelements nicht durch das Getriebe bzw. dem Planetenabtriebsradsatz geführt werden muss.

Schließlich ist es von Vorteil, wenn das Schaltelement und das Kupplungssystem auf axial gegenüberliegenden Seiten der Hauptachse angeordnet sind, sodass die hydraulische Ansteuerung beider Komponenten nicht durch das Getriebe bzw. durch den Planetenradsatz geführt werden muss. Hierbei ist zumindest das Getriebe und der Planetenabtriebsradsatz axial zwischen dem Kupplungssystem und dem Schaltelement angeordnet.

Die elektrische Maschine kann entweder über eine Zahnradstufe an den Planetenabtriebsradsatz angebunden werden, wenn die elektrische Maschine parallel zur Hauptachse angeordnet ist. Auch ist es jedoch denkbar, die elektrische Maschine koaxial zur Hauptachse anzuordnen.

Alle in der vorliegenden Schrift genannten Kupplungen können als Reibkupplungen oder formschlüssige Kupplungen ausgebildet sein.

Alle in der vorliegenden Schrift genannten Bremsen sind vorteilhafterweise als reibschlüssige Bremsen ausgeführt, können jedoch zudem eine formschlüssige Komponente beinhalten, wodurch in einem geschalteten Zustand jener Bremse keine weitere Energie benötigt wird, um diesen geschalteten Zustand zu halten.

Die Erfindung wird nachfolgend beispielhaft unter Bezugnahme auf die beigefügten Zeichnungen beschrieben.
Fig. 1 zeigt einen Antriebsstrang nach einem ersten Ausführungsbeispiel.
Fig. 2 zeigt einen Schaltplan für einen Antriebsstrang nach einem ersten Ausführungsbeispiel.
Fig. 3 zeigt einen Antriebsstrang nach einem zweiten Ausführungsbeispiel.
Fig. 4 zeigt einen Schaltplan für einen Antriebsstrang nach einem zweiten, dritten und vierten Ausführungsbeispiel.
Fig. 5 zeigt einen Antriebsstrang nach einem dritten Ausführungsbeispiel.
Fig. 6 zeigt einen Antriebsstrang nach einem vierten Ausführungsbeispiel.

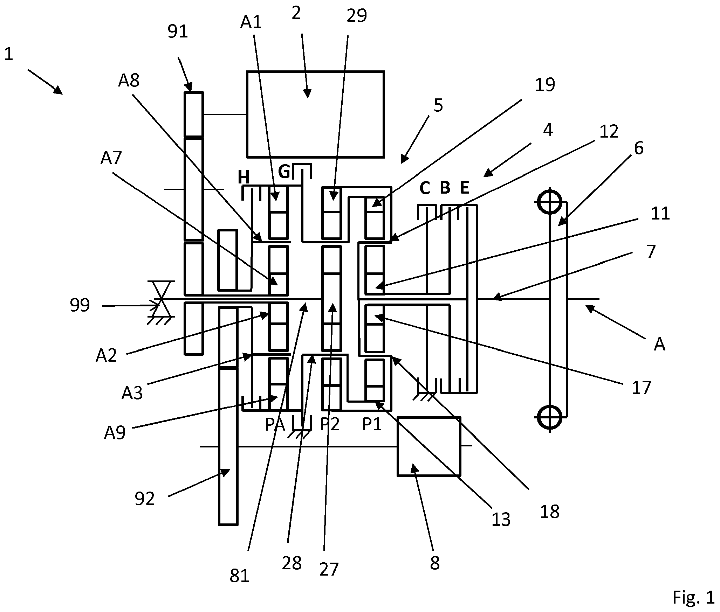

Der in Fig. 1 gezeigte Antriebsstrang 1 weist eine Verbrennungskraftmaschine (in Fig. 1 nicht gezeigt), ein Getriebe 5, eine Eingangswelle 7, ein Kupplungssystem 4, einen Planetenabtriebsradsatz PA, eine elektrische Maschine 2 und einen Abtrieb 8 auf.

Die Verbrennungskraftmaschine, das Kupplungssystem 4, das Getriebe 5 und Planetenabtriebsradsatz PA sind entlang einer Hauptachse A angeordnet.

Die elektrische Maschine 2 ist parallel zur Hauptachse A angeordnet.

Das Kupplungssystem 4 ist mit dem Getriebe 5 gekoppelt und weist eine Bremse C, eine Kupplung B und eine Kupplung E auf.

Das Getriebe 5 weist einen ersten Planetenradsatz P1 auf, umfassend einem ersten Element 11, einem zweiten Element 12 und einem dritten Element 13, wobei das erste Element 11 einem Sonnenrad 17 zugeordnet ist, wobei das zweite Element 12 einem Träger 18 zugeordnet ist und wobei das dritte Element 13 einem Hohlrad 19 zugeordnet ist.

Das Sonnenrad 17 des ersten Planetenradsatzes P1 ist mittels einer Kupplung B mit der Eingangswelle 7 verbindbar, die in Verbindung mit einem Massenschwungrad 6 und der Verbrennungskraftmaschine steht.

Zudem ist das Sonnenrad 17 des ersten Planetenradsatzes P1 mittels der Bremse C mit dem Gehäuse verbindbar bzw. verblockbar.

Der Träger 18 des ersten Planetenradsatzes P1 ist mittels der Kupplung E mit der Eingangswelle 7 und somit mit der Verbrennungskraftmaschine verbindbar.

Das Getriebe 5 weist ferner einen zweiten Planetenradsatz P2 auf, umfassend einem ersten Element, einem zweiten Element und einem dritten Element, wobei das erste Element einem Sonnenrad 27 zugeordnet ist, wobei das zweite Element einem Träger 28 zugeordnet ist und wobei das dritte Element einem Hohlrad 29 zugeordnet ist.

Der Träger 17 des ersten Planetenradsatzes P1 ist mit dem Hohlrad 29 des zweiten Planetenradsatzes P2 drehverbunden.

Das Hohlrad 19 des ersten Planetenradsatzes P1 ist wiederum mit dem Träger 28 des zweiten Planetenrads P2 drehverbunden.

Das Sonnenrad 27 des zweiten Planetenradsatzes P2 ist über eine Welle 81 mit einem Schaltelement 99 in Form einer Freilaufkupplung gekoppelt.

Die Welle 81 erstreckt sich axial entlang der Hauptachse A aus dem Getriebe 5 heraus und ist drehbar zum Sonnenrad A7 des Planetenabtriebradsatzes PA gelagert. Die Freilaufkupplung, die ebenfalls an der Hauptachse A angeordnet ist, wird benötigt, um eine Antriebsleistung der Verbrennungskraftmaschine 3 im zweiten Planetenradsatz P2 gegen das Gehäuse abstützen zu können.

Der Planetenabtriebsradsatz PA umfasst ein erstes Element, ein zweites Element und ein drittes Element, wobei das erste Element einem Hohlrad A9 zugeordnet ist, wobei das zweite Element einem Sonnenrad A7 zugeordnet ist und wobei ein drittes Element einem Träger A8 zugeordnet ist.

Das Hohlrad A9 des Planetenabtriebradsatzes PA ist mit dem Träger 28 des zweiten Planetenradsatzes P2 und somit mit dem Getriebe 5 verbunden. Der Träger 28 bildet somit einen Ausgang des Getriebes 5, der wiederum mit dem Planetenabtriebsradsatz PA verbunden ist.

Die elektrische Maschine 2 ist über eine Zahnradstufe 91 mit dem Sonnenrad A7 des Planetenabtriebradsatzes PA drehverbunden.

Der Träger A8 des Planetenabtriebradsatzes PA ist über eine Zahnradstufe 92 mit dem Abtrieb 8 verbunden.

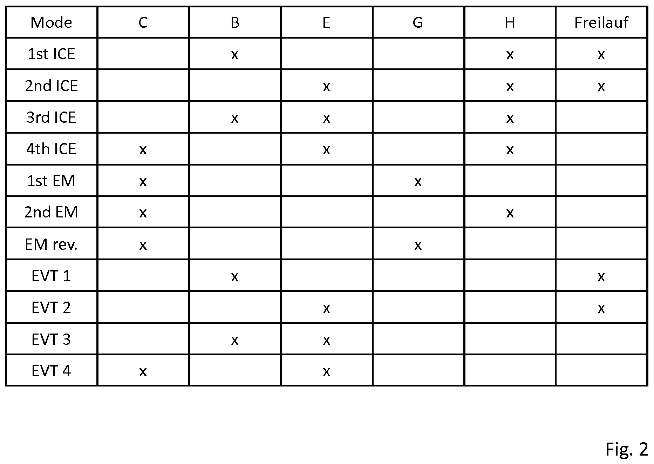

Um eine der vier möglichen verbrennungskraftmotorischen Gangstufen gemäß Figur 2 einzulegen, ist zumindest eine der beiden Kupplungen B bzw. E geschlossen, sodass eine Antriebsleistung von der Verbrennungskraftmaschine 3 in das Getriebe 5 eingeleitet wird. Des Weiteren beeinflusst die Bremse C je nach Schaltstellung die Übersetzung im Getriebe 5.

Sofern die elektrische Maschine 2 keine Antriebsleistung zur verbrennungskraftmotorischen Gangstufe beiträgt, muss mittels einer Kupplung H eine Verblockung des Planetenabtriebsradsatzes PA erfolgen, in dem der Träger A8 und das Hohlrad A9 miteinander verbunden werden.

Die verbrennungsmotorische Antriebsleistung windet sich so über die Kupplungen B und/oder E hin zum ersten Planetenradsatz P1, verläuft weiter zum Planetenradsatz P2 und findet dann den Weg zum Hohlrad A9 des Planetenabtriebsradsatzes PA, wo es dann über dem Träger A8 hin zum Abtrieb 8 geht.

Die Bremse G ist notwendig, um ein von der elektrischen Maschine 2 in den Planetenabtriebsradsatz PA eingeleitetes Drehmoment gegen das Gehäuse abstützen zu können. Eine elektrische Gangstufe setzt entsprechend voraus, dass die Kupplung G geschaltet ist und so das Hohlrad A9 festsetzt.

Eine weitere Gangstufe ist gemäß Fig. 2 eingelegt, wenn die Kupplung H das Hohlrad A9 und den Träger A8 miteinander drehverbindet.

Die eVT-Gangstufen werden so geschaltet, als ob rein verbrennungsmotorische Gangstufen gewählt werden würden, mit dem Unterschied, dass die Kupplung H nicht geschaltet ist, sodass das Antriebsmoment der Verbrennungskraftmaschine in das Hohlrad A9 und das Antriebsmoment der elektrischen Maschine 2 in das Sonnenrad A7 geleitet werden können.

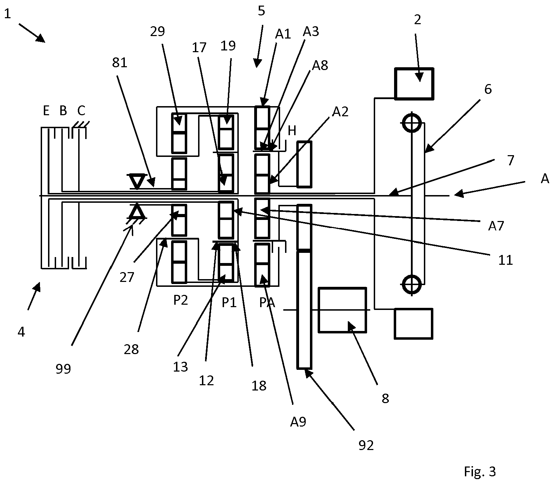

Der in Fig. 3 gezeigte Antriebsstrang 1 zeigt ein zweites Ausführungsbeispiel und enthält im Wesentlichen die gleichen Komponenten wie Fig. 1, weshalb diese entsprechend mit den gleichen Bezugszeichen versehen ist.

Der Antriebsstrang 1 weist eine Verbrennungskraftmaschine (in Fig. 3 nicht gezeigt), ein Getriebe 5, ein Kupplungssystem 4, einen Planetenabtriebsradsatz PA, eine elektrische Maschine 2 und einen Abtrieb 8 auf.

Die Verbrennungskraftmaschine, eine Eingangswelle 7, die elektrische Maschine 2, das Kupplungssystem 4, das Getriebe 5 und Planetenabtriebsradsatz PA sind entlang einer Hauptachse A angeordnet.

Das Kupplungssystem 4 ist mit dem Getriebe 5 und über die Eingangswelle 7 mit der Verbrennungskraftmaschine 2 gekoppelt und weist eine Bremse C, eine Kupplung B und eine Kupplung E auf, wobei die Verbrennungskraftmaschine und das Kupplungssystem 4 axial auf gegenüberliegenden Seiten der Hauptachse A angeordnet sind.

Das Getriebe 5 weist einen ersten Planetenradsatz P1 auf, umfassend einem ersten Element, einem zweiten Element und einem dritten Element, wobei das erste Element einem Sonnenrad 17 zugeordnet ist, wobei das zweite Element einem Träger 18 zugeordnet ist und wobei das dritte Element einem Hohlrad 19 zugeordnet ist.

Das Sonnenrad 17 des ersten Planetenradsatzes P1 ist mittels einer Kupplung B mit der Eingangswelle 7 verbindbar.

Zudem ist das Sonnenrad 17 des ersten Planetenradsatzes P1 mittels der Bremse C mit dem Gehäuse verbindbar bzw. verblockbar.

Der Träger 18 des ersten Planetenradsatzes P1 ist mittels der Kupplung E mit der Eingangswelle 7 und somit mit der Verbrennungskraftmaschine verbindbar.

Das Getriebe 5 weist ferner einen zweiten Planetenradsatz P2 auf, umfassend einem ersten Element, einem zweiten Element und einem dritten Element, wobei das erste Element einem Sonnenrad 27 zugeordnet ist, wobei das zweite Element einem Träger 28 zugeordnet ist und wobei das dritte Element einem Hohlrad 29 zugeordnet ist.

Der Träger 17 des ersten Planetenradsatzes P1 ist mit dem Hohlrad 29 des zweiten Planetenradsatzes P2 drehverbunden.

Das Hohlrad 19 des ersten Planetenradsatzes P1 ist wiederum mit dem Träger 28 des zweiten Planetenrads P2 drehverbunden.

Das Sonnenrad 27 des zweiten Planetenradsatzes P2 ist über eine Welle 81 mit einem Schaltelement 99 in Form einer Freilaufkupplung gekoppelt.

Die Welle 81 erstreckt sich axial entlang der Hauptachse A aus dem Getriebe 5 heraus und ist drehbar zum Sonnenrad A7 des Planetenabtriebradsatzes PA gelagert. Die Freilaufkupplung, die ebenfalls an der Hauptachse A angeordnet ist, wird benötigt, um eine Antriebsleistung der Verbrennungskraftmaschine im zweiten Planetenradsatz P2 gegen das Gehäuse abstützen zu können.

Das Schaltelement 99 und das Kupplungssystem 4 sind axial auf gegenüberliegenden Seiten der Hauptachse A angeordnet.

Der Planetenabtriebsradsatz PA umfasst ein erstes Element, ein zweites Element und ein drittes Element, wobei das erste Element einem Hohlrad A9 zugeordnet ist, wobei das zweite Element einem Sonnenrad A7 zugeordnet ist und wobei ein drittes Element einem Träger A8 zugeordnet ist.

Das Sonnenrad A7 des Planetenabtriebradsatzes PA und die Eingangswelle 7 sind zueinander drehbar gelagert.

Das Hohlrad A9 des Planetenabtriebradsatzes PA ist mit dem Träger 28 des zweiten Planetenradsatzes P2 und somit mit dem Getriebe 5 verbunden. Der Träger 28 bildet somit einen Ausgang des Getriebes 5, der wiederum mit dem Planetenabtriebsradsatz PA verbunden ist.

Die elektrische Maschine 2 ist mit dem Sonnenrad A7 des Planetenabtriebradsatzes PA drehverbunden.

Der Träger A8 des Planetenabtriebradsatzes PA ist über eine Zahnradstufe 92 mit dem Abtrieb 8 verbunden.

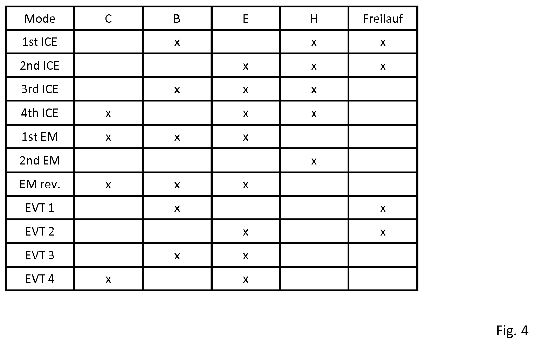

Die verbrennungsmotorischen Gangstufen werden gemäß Fig. 4 eingelegt, wie es im Antriebsstrang 1 aus dem ersten Ausführungsbeispiel und der Fig. 2 gezeigt wurde.

Die eVT-Gangstufen werden gemäß Fig.4 ebenso eingelegt, wie es im Antriebsstrang 1 aus dem ersten Ausführungsbeispiel und der Fig. 2 gezeigt wurde.

Aufgrund der fehlenden Bremse G, erfolgt die Blockierung des Hohlrades A9 auf einem anderen Weg. Hierzu werden mittels der Kupplungen B und E und der Bremse C das Sonnenrad 17 und der Träger 18 miteinander verbunden und gegen das Gehäuse blockiert, weshalb auch das Hohlrad 19 und der damit drehverbundene Träger 28 des zweiten Planetenradsatzes P2 stillstehen und somit auch das Hohlrad A9.

Eine von der elektrischen Maschine 2 bereitgestelltes Drehmoment kann sich so am Getriebe 5 abstützen, wodurch eine rein elektrische Gangstufe umsetzbar ist.

Für eine weitere rein elektrische Gangstufe muss mittels einer Kupplung H eine Verblockung des Planetenabtriebsradsatzes PA erfolgen, in dem der Träger A8 und das Hohlrad A9 miteinander verbunden werden.

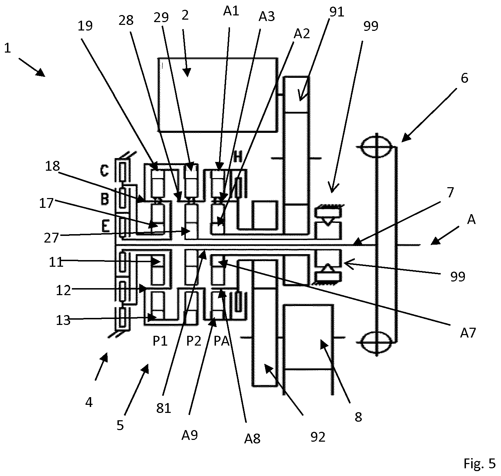

Der in Fig. 5 gezeigte Antriebsstrang 1 zeigt ein drittes Ausführungsbeispiel und enthält im Wesentlichen die gleichen Komponenten wie der Antriebsstrang aus Fig. 3, weshalb diese Figur entsprechend mit den gleichen Bezugszeichen versehen ist. Auch in der Figur 5 ist die Verbrennungskraftmaschine zeichnerisch nicht dargestellt. Die Funktionsweise entspricht ebenso die des vorherigen Ausführungsbeispiels, weshalb der Schaltplan aus Fig. 4 analog angewendet werden kann und an dieser Stelle nicht weiter erläutert wird.

Die Unterschiede betreffen zum einen die Anbindung der elektrischen Maschine 2, die nun parallel zur Hauptachse A angeordnet und über eine Zahnradstufe 91 mit einem Sonnenrad A7 eines Planetenabtriebsradsatzes PA drehgekoppelt ist.

Ferner erstreckt sich das mit dem Sonnenrad 27 über eine Welle 81 drehverbundene Schaltelement 99 (in der Form eines Freilaufs) nicht nur axial aus einem Getriebe 5 heraus, sondern ist nun gegenüberliegend zu dem Kupplungssystem 4 angeordnet. Das Getriebe 5, der Planetenabtriebsradsatz PA, die Zahnradstufe 92 und die Zahnradstufe 91 sind axial zwischen dem Kupplungssystem 4 und dem Schaltelement 99 angeordnet, wodurch der Antriebsstrang 1 radial und axial besonders kompakt baut, da das Schaltelement einen freien radialen Raum auf axialer Höhe des Abtriebs 8 nutzt.

Die Welle 81 ist hierbei drehbar zur Eingangswelle 7 und zu einem Zahnrad der Zahnradstufe 91 gelagert.

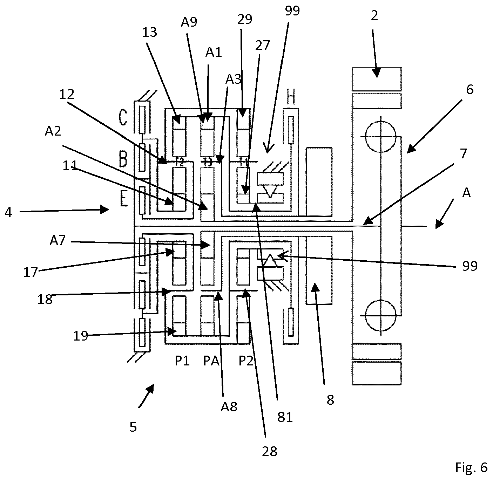

Der in Fig. 6 gezeigte Antriebsstrang 1 zeigt ein viertes Ausführungsbeispiel und enthält im Wesentlichen die gleichen Komponenten wie der Antriebsstrang aus Fig. 3, weshalb die gleichen Bezugszeichen Verwendung finden. Auch in der Figur 6 ist die Verbrennungskraftmaschine zeichnerisch nicht dargestellt. Die Funktionsweise entspricht ebenso dem Antriebsstrang des zweiten Ausführungsbeispiels, weshalb der Schaltplan aus Fig. 4 analog angewendet werden kann und an dieser Stelle nicht weiter erläutert wird.

Die Unterschiede ergeben sich nun insbesondere in der Anordnung des Getriebes 5 und des Planetenabtriebradsatzes PA. Axial zwischen den beiden Planetenradsätzen P1 und P2 ist nun der Planetenabtriebsradsatz PA angeordnet. Die jeweiligen Sonnenräder, Träger und Hohlräder der Planetenradsätze P1,P2 bzw. des Planetenabtriebsradsatzes PA sind jedoch unverändert zu den vorherigen Ausführungsbeispielen miteinander drehverbunden.

Das Schaltelement 99 ist in der Form eines Freilaufes ausgebildet und derart angeordnet, dass zwischen dem Schaltelement 99 und dem Kupplungssystem 4 das Getriebe 5 und der Planetenabtriebsradsatz PA angeordnet sind. Die Welle 81, die das Schaltelement 99 mit dem Sonnenrad des zweiten Planetenradsatzes verbindet, ist drehbar zum Träger 28 des zweiten Planetenradsatzes P2 gelagert. Ferner ist die Bremse H, welche dazu ausgelegt ist, Träger A8 und Hohlrad A9 des Planetenabtriebsradsatzes PA zu verbinden, axial zwischen dem Schaltelement 99 und dem Abtrieb 8 angeordnet.

### Bezugszeichenliste

- 1: Antriebsstrang
- 2: Elektrische Maschine

- 4: Kupplungssystem
- 5: Getriebe
- 6: Schwingungsdämpfer
- 7: Eingangswelle
- 8: Abtrieb

- 11: Erstes Element d. ersten Planetenradsatzes
- 12: Zweites Element d. ersten Planetenradsatzes
- 13: Drittes Element d. ersten Planetenradsatzes

- 17: Sonnenrad d. ersten Planetenradsatzes
- 18: Träger d. ersten Planetenradsatzes
- 19: Hohlrad d. ersten Planetenradsatzes

- 21: Erstes Element d. zweiten Planetenradsatzes
- 22: Zweites Element d. zweiten Planetenradsatzes
- 23: Drittes Element d. zweiten Planetenradsatzes

- 27: Sonnenrad d. zweiten Planetenradsatzes
- 28: Träger d. zweiten Planetenradsatzes
- 29: Hohlrad d. zweiten Planetenradsatzes

- 81: Welle
- 91: Zahnradstufe
- 92: Zahnradstufe
- 99: Schaltelement

- A1: Erstes Element d. Planetenabtriebradsatzes
- A2: Zweites Element d. Planetenabtriebradsatzes
- A3: Drittes Element d. Planetenabtriebradsatzes

- A7: Sonnenrad d. Planetenabtriebradsatzes
- A8: Träger d. Planetenabtriebradsatzes
- A9: Hohlrad d. Planetenabtriebradsatzes

- A: Hauptachse

- B: Kupplung
- C: Bremse
- E: Kupplung
- G: Bremse
- H: Kupplung
- Y: Kupplung
- Z: Bremse

- PA: Planetenabtriebradsatzes
- P1: Erster Planetenradsatz
- P2: Zweiter Planetenradsatz

## Patentansprüche

1. Antriebsstrang (1) mit einer elektrischen Maschine (2), einer Verbrennungskraftmaschine, einem Getriebe (5), einem Planetenabtriebsradsatz (PA), wobei die Verbrennungskraftmaschine an das Getriebe (5) angebunden oder anbindbar ist, wobei der Planetenabtriebsradsatz (PA) ein Hohlrad (A9), ein Sonnenrad (A7) und einen Träger (A8) aufweist, wobei das Getriebe (5) an das Hohlrad (A9) des Planetenabtriebradsatzes (PA) angebunden ist, wobei die elektrische Maschine (2) an das Sonnenrad (A7) des Planetenabtriebradsatzes (PA) angebunden oder anbindbar ist, wobei der Träger (A8) des Planetenabtriebradsatzes (PA) mit einem Abtrieb (8) verbunden ist, wobei die Verbrennungskraftmaschine, das Getriebe (5) und der Planetenabtriebsradsatz (PA) entlang einer Hauptachse A angeordnet sind, wobei die Verbrennungskraftmaschine über eine Eingangswelle (7) mit einem Kupplungssystem (4) verbunden ist, wobei das Kupplungssystem (4) mit dem Getriebe (5) gekoppelt ist und wobei das Sonnenrad (A7) des Planetenabtriebradsatzes (PA) und die Eingangswelle (7) drehbar zueinander gelagert sind, und wobei das Getriebe (5) aus einem ersten und einem zweiten Planetenradsatz (P1, P2) besteht, die miteinander gekoppelt sind, wobei der erste und der zweite Planetenradsatz (P1, P2) jeweils ein Sonnenrad (17, 27), einen Träger (18, 28) und ein Hohlrad (19, 29) aufweisen, wobei der erste Planetenradsatz (P1) mit dem Kupplungssystem (4) gekoppelt ist, **dadurch gekennzeichnet, dass** das Kupplungssystem (4) eine erste Kupplung (B), eine zweite Kupplung (E) und eine erste Bremse (C) aufweist, wobei das Sonnenrad (17) des ersten Planetenradsatzes und die Verbrennungskraftmaschine mittels der ersten Kupplung (B) verbindbar sind, wobei der Träger des ersten Planetenradsatzes und die Verbrennungskraftmaschine mittels der zweiten Kupplung (E) verbindbar sind und wobei das Sonnenrad des ersten Planetenradsatzes mittels der Bremse (C) gegen ein Gehäuse blockierbar ist.

2. Antriebsstrang (1) nach Anspruch 1, **dadurch gekennzeichnet, dass** das Kupplungssystem (4) und die Verbrennungskraftmaschine axial auf gegenüberliegenden Seiten der Hauptachse A angeordnet sind.

3. Antriebsstrang (1) nach Anspruch 1, **dadurch gekennzeichnet, dass** der Träger (18) des ersten Planetenradsatzes (P1) mit dem Hohlrad (29) des zweiten Planetenradsatzes (P2) drehfest verbunden ist, wobei das Hohlrad (19) des ersten Planetenradsatzes (P1) mit dem Träger (28) des zweiten Planetenradsatzes (P2) drehfest verbunden ist.

4. Antriebsstrang (1) nach Anspruch 1 oder 3, **dadurch gekennzeichnet, dass** der Träger (28) des zweiten Planetenradsatzes (P2) mit dem Hohlrad (A9) des Planetenabtriebradsatzes (PA) drehverbunden ist und mittels einer Bremse (G) gegen das Gehäuse blockierbar ist.

5. Antriebsstrang (1) nach einem der Ansprüche 1 bis 4, **dadurch gekennzeichnet, dass** das Hohlrad (A9) und der Träger (A8) des Planetenabtriebradsatzes (PA) mittels einer dritten Kupplung (H) drehfest verbindbar sind.

6. Antriebsstrang (1) nach einem der Ansprüche 1 bis 5, **dadurch gekennzeichnet, dass** das Sonnenrad (27) des zweiten Planetenradsatzes (P2) mit einer Welle (81) drehverbunden ist, die sich axial entlang der Hauptachse A aus dem Getriebe (5) heraus erstreckt und drehbar zum Sonnenrad (A7) des Planetenabtriebradsatzes (PA) gelagert ist und wobei die Welle (81) ein Schaltelement (99) aufweist, das entweder als ein Freilauf, eine Schaltkupplung oder eine Bremse ausgebildet ist, um das Sonnenrad (27) gegen das Gehäuse blockieren zu können.

7. Antriebsstrang (1) nach Anspruch 6, **dadurch gekennzeichnet, dass** das Schaltelement (99) ebenfalls entlang der Hauptachse A angeordnet ist.

8. Antriebstrang (1) nach Anspruch 7, **dadurch gekennzeichnet, dass** das Schaltelement (99) und das Kupplungssystem (4) auf axial gegenüberliegenden Seiten der Hauptachse A angeordnet sind.

## Claims

1. Drive train (1) having an electric machine (2), an internal combustion engine, a transmission (5), a planetary output drive wheel set (PA), wherein the internal combustion engine is or can be connected to the transmission (5); the planetary output drive wheel set (PA) has an internal gear (A9), a sun gear (A7) and a carrier (A8); the transmission (5) is attached to the internal gear (A9) of the planetary output drive wheel set (PA); the electric machine (2) is or can be connected to the sun gear (A7) of the planetary output drive wheel set (PA); the carrier (A8) of the planetary output drive wheel set (PA) is connected to an output (8); the internal combustion engine, the transmission (5) and the planetary output drive wheel set (PA) are arranged along a main axis A; the internal combustion engine is connected to a clutch system (4) via an input shaft (7); the clutch system (4) is coupled to the transmission (5), and the sun gear (A7) of the planetary output drive wheel set (PA) and the input shaft (7) are mounted such that they can rotate relative to each other; and the transmission (5) comprises a first and a second planetary gear set (P1, P2) which are coupled to each other; the first and second planetary gear set (P1, P2) each have a sun gear (17, 27), a carrier (18, 28) and an internal gear (19, 29), wherein the first planetary gear set (P1) is coupled to the clutch system (4),
**characterized in that**
the clutch system (4) has a first clutch (B), a second clutch (E) and a first brake (C), wherein the sun gear (17) of the first planetary gear set and the internal combustion engine can be connected by means of the first clutch (B), wherein the carrier of the first planetary gear set and the internal combustion engine can be connected by means of the second clutch (E), and wherein the sun gear of the first planetary gear set can be blocked against a housing by means of the brake (C).

2. Drive train (1) according to Claim 1, **characterized in that** the clutch system (4) and the internal combustion engine are arranged axially on opposite sides of the main axis A.

3. Drive train (1) according to Claim 1, **characterized in that** the carrier (18) of the first planetary gear set (P1) is co-rotationally connected to the internal gear (29) of the second planetary gear set (P2), wherein the internal gear (19) of the first planetary gear set (P1) is co-rotationally connected to the carrier (28) of the second planetary gear set (P2).

4. Drive train (1) according to Claim 1 or 3, **characterized in that** the carrier (28) of the second planetary gear set (P2) is rotationally connected to the internal gear (A9) of the planetary output drive gear set (PA) and can be blocked against the housing by means of a brake (G).

5. Drive train (1) according to one of Claims 1 to 4, **characterized in that** the internal gear (A9) and the carrier (A8) of the planetary output drive wheel set (PA) can be co-rotationally connected by means of a third clutch (H).

6. Drive train (1) according to one of Claims 1 to 5, **characterized in that** the sun gear (27) of the second planetary gear set (P2) is rotationally connected to a shaft (81), which extends out of the transmission (5) axially along the main axis A and is mounted such that it can rotate relative to the sun gear (A7) of the planetary output drive gear set (PA), wherein the shaft (81) has a switching element (99), which is designed either as a freewheel, a switching clutch or a brake in order to be able to block the sun gear (27) against the housing.

7. Drive train (1) according to Claim 6, **characterized in that** the switching element (99) is likewise arranged along the main axis A.

8. Drive train (1) according to Claim 7, **characterized in that** the switching element (99) and the clutch system (4) are arranged on axially opposite sides of the main axis A.

## Revendications

1. Chaîne cinématique (1), comprenant une machine électrique (2), un moteur à combustion interne, une boîte de vitesses (5) et un train planétaire de sortie (PA), le moteur à combustion interne étant raccordé ou pouvant être raccordé à la boîte de vitesses (5), le train planétaire de sortie (PA) présentant une couronne (A9), une roue solaire (A7) et un support (A8), la boîte de vitesses (5) étant raccordée à la couronne (A9) du train planétaire de sortie (PA), la machine électrique (2) étant raccordée ou pouvant être raccordée à la roue solaire (A7) du train planétaire de sortie (PA), le support (A8) du train planétaire de sortie (PA) étant relié à un entraînement (8), le moteur à combustion interne, la boîte de vitesses (5) et le train planétaire de sortie (PA) étant disposés le long d'un axe principal A, le moteur à combustion interne étant relié à un système d'embrayage (4) par l'intermédiaire d'un arbre d'entrée (7), le système d'embrayage (4) étant accouplé à la boîte de vitesses (5), et la roue solaire (A7) du train planétaire de sortie (PA) et l'arbre d'entrée (7) étant montés en rotation l'une par rapport à l'autre, et la boîte de vitesses (5) étant composée d'un premier et d'un deuxième train planétaire (P1, P2) qui sont accouplés ensemble, le premier et le deuxième train planétaire (P1, P2) présentant respectivement une roue solaire (17, 27), un support (18, 28) et une couronne (19, 29), le premier train planétaire (P1) étant accouplé au système d'embrayage (4),
**caractérisée en ce que** le système d'embrayage (4) présente un premier embrayage (B), un deuxième embrayage (E) et un premier frein (C), la roue solaire (17) du premier train planétaire et le moteur à combustion interne pouvant être reliés au moyen du premier embrayage (B), le support du premier train planétaire et le moteur à combustion interne pouvant être reliés au moyen du deuxième embrayage (E), et la roue solaire du premier train planétaire pouvant être bloquée contre un carter au moyen du frein (C).

2. Chaîne cinématique (1) selon la revendication 1, **caractérisée en ce que** le système d'embrayage (4) et le moteur à combustion interne sont disposés axialement sur des côtés opposés de l'axe principal A.

3. Chaîne cinématique (1) selon la revendication 1, **caractérisée en ce que** le support (18) du premier train planétaire (P1) est relié à la couronne (29) du deuxième train planétaire (P2) de manière solidaire en rotation, la couronne (19) du premier train planétaire (P1) étant relié au support (28) du deuxième train planétaire (P2) de manière solidaire en rotation.

4. Chaîne cinématique (1) selon la revendication 1 ou 3, **caractérisée en ce que** le support (28) du deuxième train planétaire (P2) est relié en rotation à la couronne (A9) du train planétaire de sortie (PA) et peut être bloqué contre le carter au moyen d'un frein (G).

5. Chaîne cinématique (1) selon l'une quelconque des revendications 1 à 4, **caractérisée en ce que** la couronne (A9) et le support (A8) du train planétaire de sortie (PA) peuvent être reliés de manière solidaire en rotation au moyen d'un troisième embrayage (H).

6. Chaîne cinématique (1) selon l'une quelconque des revendications 1 à 5, **caractérisée en ce que** la roue solaire (27) du deuxième train planétaire (P2) est reliée en rotation à un arbre (81) qui s'étend axialement le long de l'axe principal A en sortant de la boîte de vitesses (5) et est monté en rotation par rapport à la roue solaire (A7) du train planétaire de sortie (PA), et l'arbre (81) présentant un élément de commutation (99) qui est réalisé sous la forme d'une roue libre, d'un embrayage ou d'un frein afin de pouvoir bloquer la roue solaire (27) contre le carter.

7. Chaîne cinématique (1) selon la revendication 6, **caractérisée en ce que** l'élément de commutation (99) est également disposé le long de l'axe principal A.

8. Chaîne cinématique (1) selon la revendication 7, **caractérisée en ce que** l'élément de commutation (99) et le système d'embrayage (4) sont disposés sur des côtés axialement opposés de l'axe principal A.
